# EUROPEAN PATENT APPLICATION

(11) **EP 4 644 967 A1**
(43) Date of publication of application: **05.11.2025**
(21) Application number: 24173820.2
(22) Date of filing: 02.05.2024
(51) Int. Cl.: G02B 21/34, G02B 21/36, G02B 21/00

(54) **METHOD FOR DETERMINING A CALIBRATION OF A MICROSCOPE, COMPUTER PROGRAM PRODUCT, CONTROLLER, AND MICROSCOPE**

(71) Applicant: Leica Microsystems CMS GmbH, 35578 Wetzlar (DE)
(72) Inventor: Ritschel, Kai, 35578 Wetzlar (DE); Beljan, Mate, 35578 Wetzlar (DE); Walter, Kai, 35578 Wetzlar (DE)
(74) Representative: Schaumburg und Partner Patentanwälte mbB

(57) **Abstract**

A method for determining a calibration of a microscope (100) comprises the following steps: Illuminating a first region (306a) of a reference object (300) using illumination light generated by the microscope (100), wherein the reference object (300) is arranged in a sample space (118) of the microscope (100) and comprises multiple pattern elements (302a, 302b, 302c) arranged in a known regular pattern (304, 310), and the first region (306a) comprises at least one first pattern element (302a). Generating at least one first image of the first region (306a) using an optical system (104) of the microscope (100) and generating first image data corresponding to said at least one first image. Determining an approximate position of at least one second pattern element (302b) based on the first image data and the known regular pattern (304, 310). Determining a second region (306b) of the reference object (300) comprising the at least one second pattern element (302b) based on the previously determined approximate position. Illuminating the second region (306b) using the illumination light. Generating at least one second image of the second region (306b) using the optical system (104) of the microscope (100) and generating second image data corresponding to said at least one second image. Determining parameters of a calibration for the microscope (100) based on the first image data and the second image data.

## Description

### Technical field

The invention relates to a method for determining a calibration of a microscope. The invention also relates to a computer program product, and a controller. The invention further relates to a microscope.

### Background

The optical system of a microscope distorts the image captured by the microscope, in particular in the form of chromatic and spherical aberrations. Variable elements such as filters can introduce additional distortions in the form of shift. Thus, in order to accurately relate coordinates in image space to coordinates in the imaged volume, the microscope needs to be calibrated. Typical calibration methods use technical samples comprising grids or other regular patterns, which are imaged using a detector. The images of the technical samples are then processed to identify the regular pattern, and to quantify the distortions introduced by the optical system based on how the regular pattern is distorted in the image. Based on this quantification a more faithful representation of the imaged volume can be reconstructed. If the microscope comprises more than one detector, the images captured by the different detectors need to be aligned, and differences in magnification need to be accounted for.

The calibration of the microscope requires a precise sampling of the technical sample in order to capture as many features of the regular pattern as accurately as possible. This requires long scan times and large amounts of data storage for the image data acquired during the calibration. Further, processing these large amounts of image data is challenging and prone to error. A calibration in three dimensions drastically increases the scan time and amount of image data captured. For a three-dimensional calibration, a three-dimensional technical sample is needed which is expensive and challenging to manufacture. Alternatively, the two-dimensional technical sample has to be moved along a z-axis, which also drastically increases the scan time.

### Summary

It is an object to provide a method for determining a calibration of a microscope, a computer program product, a controller, and a microscope that enable a more efficient calibration of the microscope.

The aforementioned object is achieved by the subject-matter of the independent claims. Advantageous embodiments are defined in the dependent claims and the following description.

The proposed method for determining a calibration of a microscope comprises the following steps: a) Illuminating a first region of a reference object using illumination light generated by the microscope, wherein the reference object is arranged in a sample space of the microscope and comprises multiple pattern elements arranged in a known regular pattern, and the first region comprises at least one first pattern element. b) Generating at least one first image of the first region using an optical system of the microscope and generating first image data corresponding to said at least one first image. c) Determining an approximate position of at least one second pattern element based on the first image data and the known regular pattern. e) Determining a second region of the reference object comprising the at least one second pattern element based on the previously determined approximate position. f) Illuminating the second region using the illumination light. g) Generating at least one second image of the second region using the optical system of the microscope and generating second image data corresponding to said at least one second image. h) Determining parameters of a calibration for the microscope based on the first image data and the second image data.

The reference object may be a technical sample, for example a microscope slide or similar element comprising the known regular pattern of the pattern elements. A regular pattern in the sense of this document is a consistent, repeating arrangement of the pattern elements that follow a predictable sequence or design across the reference element. For example, the regular pattern may be an arrangement of the pattern elements on the reference element having a known spacing between pattern elements. The pattern elements themselves are preferably dot-shaped elements that are applied to or formed in the reference object, for example as holes.

It has been recognized that the known properties of the regular pattern may be advantageously used to significantly reduce the time used for imaging the reference element as well as the image data that needs to be stored and processed. To reduce imaging time and image data, at first only a small area of the reference object is imaged which comprises the first pattern element, i.e. the first region. From the first image data generated from imaging the first region and based on the knowledge of the regular pattern, for example the distance between two neighboring pattern elements, a likely position of the second pattern element is determined, i.e. the approximate position of the second pattern element. Then, an area of the reference object is imaged which comprises the approximate position of the second pattern element, i.e. the second region, essentially skipping over the parts of the regular pattern that do not comprise pattern elements. This makes it possible to increase the local resolution of the image data, without sampling empty space with high precision. This sparse acquisition of image data significantly reduces the imaging time and the amount of image data generated during imaging, since effectively only a small area of the reference object is imaged at high precision. The sparse acquisition is especially advantageous for such reference objects, where the relevant area, i.e. the area comprising the regular pattern, is 50% or less of the reference object. Further, less computational resources are needed for performing the calibration since less image data needs to be processed. Thus, by only imaging the parts of the reference object which are relevant to the calibration, the proposed method is more efficient than previously known methods.

In an embodiment the extent of the second region along the distance between the at least one first pattern element and the at least one second pattern element is smaller than said distance. In this embodiment of the method, there is a gap between the first and second regions which does not comprise pattern elements. This gap between the first region and the second region is not imaged, thereby significantly reducing the imaging time and the amount of image data generated during imaging.

In another embodiment the pattern elements of the reference object are arranged in a two-dimensional grid, said grid having a known spacing. Preferably, the two axes of the grid are perpendicular. This regular pattern makes it particularly easy to determine the approximate position of the second pattern element based on the known spacing, further reducing the time and computational resources needed to perform the calibration.

In another embodiment the first region comprises two or more first pattern elements forming part of a first row of the grid, and the second region comprises two or more second pattern elements forming part of a second row of the grid. In this embodiment of the method, the regular pattern is imaged row by row. This is a particularly advantageous design of the regular pattern when calibrating microscopes that capture images line by line since the regular pattern is adapted to the imaging modality of the microscope. Microscopes that image line by line are, for example, certain types of laser scanning microscopes and light sheet microscopes such as oblique plane microscopes.

In another embodiment the steps a) to g) are repeated. The reference object may be moved along the optical axis of the microscope by a predetermined distance between each of the repetitions using a stage of the microscope. The calibration may be determined based on the first image data and the second image data generated in each repetition taking the predetermined distance into account. In this embodiment of the method, the steps a) to g) are repeated for different z-positions of the reference object, i.e. positions along an optical axis of the microscope. This essentially simulates a three-dimensional reference object, enabling the calibration of a microscope used for volumetric imaging.

In another embodiment the microscope is an optical scanning microscope. In particular, the microscope is a confocal laser scanning microscope. Alternatively, the microscope is a light sheet microscope configured to generate a light sheet extending along a light propagation direction and an extension direction perpendicular thereto. Optical scanning microscopes illuminate a sample by scanning the sample with a dot, a line, and/or a sheet of illumination light formed on or in the sample. This enables high-resolution imaging by controlling how the illumination light interacts with the sample. Because of this, optical scanning microscopes can precisely control the illumination depth in the sample. Thus, many optical scanning microscopes also enable a three-dimensional reconstruction of the sample, i.e. volumetric imaging.

In another embodiment the microscope is the light sheet microscope, and the pattern elements of the reference object are arranged in a two-dimensional grid. The grid has a known spacing, and the reference object is arranged such in the sample space that the extension direction is aligned with one axis of the grid. In this embodiment of the method, the grid is adapted to the illumination modality of the light sheet microscope. The light sheet intersects the grid of the pattern elements such that at least one row of pattern elements can be illuminated at a time so that the regular pattern may be imaged row by row. This makes processing the image data in order to determine the parameters of the calibration less computationally intensive, and thus the method is even more efficient.

In another embodiment the microscope is the light sheet microscope, and the first region and the second region are illuminated by illuminating a plurality of layers arranged successively along a scanning direction using the light sheet. Each plurality of layers forms a volume that is spanned by the light propagation direction, the extension direction, and the scanning direction. Where the illuminated volumes intersect the regular pattern of the pattern elements, the first region and the second region are formed. Such a light sheet microscope enables high resolution volumetric imaging by imaging the illuminated volumes and combining them into an image stack. The imaged volume may then be reconstructed using the parameters of the calibration.

In another embodiment the pattern elements of the reference object are arranged in a two-dimensional grid, said grid having a known spacing, and the reference object is arranged such in the sample space that the scanning direction is aligned with one axis of the grid. Preferably, the extension direction and the scanning direction are perpendicular and aligned to perpendicular axes of the grid each. This adapts the grid of the pattern elements to the scanning illumination of the light sheet microscope, making processing the image data in order to determine the parameters of the calibration less computationally intensive.

In another embodiment the microscope is an oblique plane microscope. Preferably, the oblique plane microscope comprises a single objective directed at the sample space. Conventional light sheet microscopes comprise two separate objectives directed at a sample, one for illumination and the other for detection. Oblique plane microscopy (OPM) is a variant of light sheet microscopy in which the light sheet is focused into the sample in such a way that it is oblique to the optical axis of the objective. This enables the oblique plane microscope to be used in applications where the sample cannot be imaged by a conventional light sheet microscope due to lack of space.

In another embodiment the microscope is a transmission microscope or a reflectance microscope. Although described mainly in the context of optical scanning microscopes, the method may also be used advantageously in the calibration of conventional light microscopes or widefield microscopes.

In another embodiment the step of determining the parameters of the calibration comprises the following sub-steps: h') Determining a position of the at least one first pattern element in the first image based on the first image data. h") Determining a position of the at least one second pattern element in the second image based on the second image data. h‴) Comparing the determined position of the at least one first and second pattern elements with the known regular pattern. In this embodiment of the method, the parameters of the calibration are determined by comparing the position of the pattern elements in the images with the known regular pattern. The differences between the regular pattern and the image of the known pattern are due to the distortions introduced by the optical system. By comparing the regular pattern with the image of the known pattern, it is possible to parameterize these distortions, thereby performing the calibration of the microscope.

In another embodiment the parameters of the calibration are parameters of a linear or non-linear transformation mapping coordinates of the imaged volume to coordinates in the image of said volume generated by the optical system of the microscope or vice versa. The transformation parameterizes the distortions introduced by the optical system. A linear transformation is sufficient in order to correct for shift and a shearing of the image stack, for example due to the optical arrangement of an oblique plane microscope. In order to correct for geometric distortions induced by the optical system, a non-linear transformation is needed. The parameters of the transformation may be determined by solving an optimization problem. For example, by determining the parameters of the transformation such that for each imaged pattern element the distance between the position of the pattern element in the image and the position of the pattern element on the reference element transformed by the transformation is minimized.

In another embodiment the step of generating the first image data and the step of generating the second image data comprise discarding image information not related to any one of the pattern elements. By discarding not needed information, the image data that needs to be processed in order to calibrate the microscope is further reduced. In an example, the image data only comprises the positions of the pattern elements in the first and second images. In other words, the image data is reduced to a point cloud by discarding image data not corresponding to the pattern elements.

In another embodiment the method comprises the additional step of successively illuminating neighboring or overlapping areas of the reference object and generating an image of the illuminated area each time until a focused image of the at least one first pattern element is generated. The sum of the neighboring or overlapping areas is the first region. In this embodiment of the method, the starting position of the calibration, i.e. the first region, is automatically determined. In an alternative embodiment, the first region of the reference object is manually determined.

In another embodiment the method comprises the additional steps: c') Determining an approximate position of at least one third pattern element based on the second image data and the known regular pattern. e') Determining a third region of the reference object comprising the at least one third pattern element based on the previously determined approximate positions. f') Illuminating the third region using the illumination light. g') Generating at least one third image of the third region using the optical system of the microscope and generating third image data corresponding to said at least one third image. The parameters of the calibration are determined taking the third image data into account. In this embodiment of the method, the steps c) to g) are repeated to determine the approximate position of the third pattern element instead of the second pattern element. The steps c) to g) may be repeated again to determine approximate positions of subsequent pattern elements. Each time the approximate position is determined based on the image data determined in the previous repetition, and new image data is generated by imaging a region of the reference object comprising the approximate position. This makes it possible to sparsely capture a large area of the reference object in an iterative process, creating less data to be stored and processed by essentially only capturing the parts of the reference object relevant to the calibration, namely the pattern elements and their positions.

In another embodiment the pattern element is a fluorescent element configured to be excitable by the illumination light. The excited fluorescent element emits fluorescence light that may be captured by the optical system of the microscope. This method can be used particularly advantageously to calibrate a microscope used for fluorescence imaging techniques, for example a laser scanning widefield microscope, a confocal laser scanning microscope or a light sheet microscope. The fluorescent element may comprise one or more fluorescent dyes, quantum dots, and/or fluorescent proteins.

In another embodiment the pattern element comprises at least one structural element formed in or on the reference object. The structural element may be a blind hole formed in a surface of the reference object or a protrusion formed on a surface of the reference object. Preferably, the remaining surface of the reference object is non-reflective. The raining surface may be made non-reflective by, for example, applying a black dye.

The invention also relates to a computer program product comprising instructions to cause a microscope to carry out the steps of the method described in this document. The computer program product has the same advantages as the method described above. In particular, the computer program product may be supplemented with the features described in this document in connection with the method. Furthermore, the method described above may be supplemented with the features described in this document in connection with the computer program product.

The invention also relates to a controller for a microscope configured to cause the microscope to carry out the steps of the method described in this document. The controller has the same advantages as the method described above. In particular, the controller may be supplemented with the features described in this document in connection with the method or the computer program product. Furthermore, the method, and the computer program product described above may be supplemented with the features described in this document in connection with the controller.

The invention also relates to a microscope comprising the controller described in this document. The microscope has the same advantages as the method described above. In particular, the microscope may be supplemented with the features described in this document in connection with the method, the computer program product, or the controller. Furthermore, the method, the computer program product, and the controller described above may be supplemented with the features described in this document in connection with the microscope.

### Short Description of the Figures

Hereinafter, specific embodiments are described referring to the drawings, wherein:
- Figure 1: is a schematic view of a microscope according to an embodiment;
- Figure 2: is a flowchart of the method for calibrating a microscope according to an embodiment;
- Figure 3: is a schematic view of a reference object used for the method according to Figure 2;
- Figure 4: is a flowchart of a sub-process for automatically determining a first region in the method according to Figure 2;
- Figure 5: is a schematic view of a region of the reference object captured by the microscope according to Figure 1;
- Figure 6: is a schematic view of another region of the reference object captured by the microscope according to Figure 1; and
- Figure 7: is a flowchart of a sub-process for determining the parameters of the calibration in the method according to Figure 2.

### Detailed Description

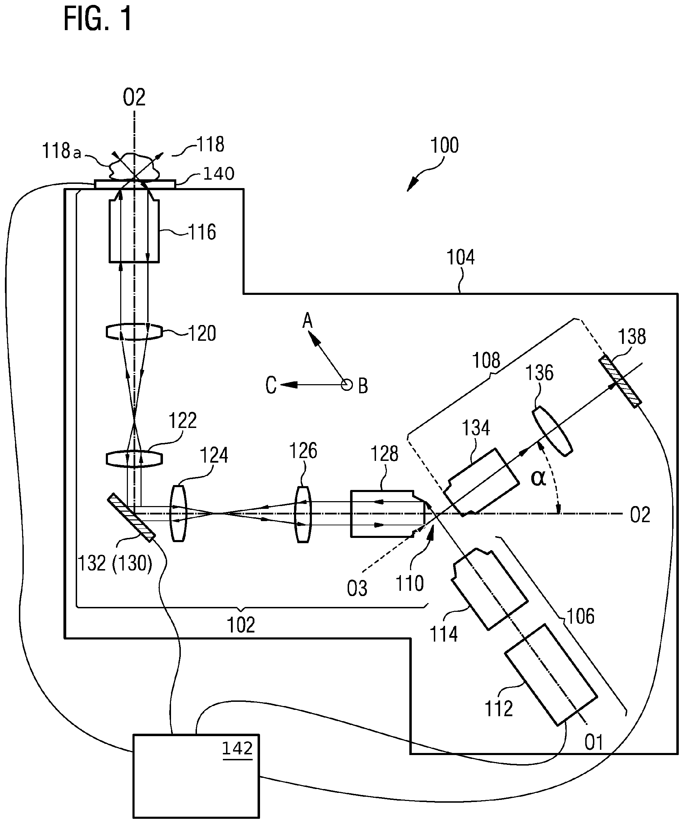

Figure 1 is a schematic view of a microscope 100 according to an embodiment. The microscope 100 is exemplary formed as an oblique plane microscope, which is a type of optical scanning microscope having a scanning direction C that is lateral to the optical axis O2 of an optical relay system 102.

The microscope 100 has an optical system 104 comprising an optical illumination system 106, the optical relay system 102, and an optical detection system 108. The optical axis O3 of the optical detection system 108 is tilted relative to the optical axis O2 of the optical relay system 102 by an angle α. The optical axis O1 of the optical illumination system 106 is perpendicular to the optical axis O3 of the optical detection system 108, so that the optical axis O1 of the optical illumination system 106 is tilted with respect to the optical axis O2 of the optical relay system 102 by an angle 90° - α. The three aforementioned optical axes O1, O2, O3 intersect in an intermediate image space 110.

The optical illumination system 106 comprises an illumination light source 112 and an illumination objective 114. The illumination light source 112 generates a light sheet, for example using a cylindrical lens not explicitly shown in Figure 1. Alternatively, the illumination light source 112 may generate a quasi-static light sheet by means of a dedicated scanning element. The light sheet extends in a light propagation direction A and an expansion direction B perpendicular thereto. The two directions A, B are indicated by an oblique coordinate system shown in Figure 1. The illumination objective 114 images the light sheet into the intermediate image space 110.

The optical relay system 102 comprises a single objective 116 facing a sample space 118, a first tube lens 120, a first ocular 122, a second ocular 124, a second tube lens 126 and a projection objective 128, which are arranged in this order along the optical axis O2 of the optical relay system 102. The optical relay system 102 images the light sheet from the intermediate image space 110 into a sample 118a arranged in the sample space 118. Since the optical axis O1 of the optical illumination system 106 is tilted by 90° - α with respect to the optical axis O2 of the optical relay system 102, the light propagation direction A is also tilted by 90° - α with respect to the optical axis O2 of the optical relay system 102. Layers within the sample 118a which are illuminated by the light sheet are imaged back into the intermediate image space 110 by the optical relay system 102 as an intermediate image.

Additionally, a scanning device 130 is arranged between the first ocular 122 and the second ocular 124. The scanning device 130 exemplary comprises a movable mirror 132 that deflects the optical axis O2 of the optical relay system 102. The movable mirror 132 can be used to move the light sheet through the sample 118a along the scanning direction C that is perpendicular to the optical axis O2 of the optical relay system 102 in the sample 118a. This allows the successive layers of the sample 118a along the scanning direction C to be illuminated so as to scan a volume of the sample 118a.

The optical detection system 108 comprises a detection objective 134, a tube lens 136, and an image sensor 138 arranged in this order starting from the intermediate image space 110. The intermediate images of the illuminated layers in the intermediate image space 110 are imaged onto the image sensor 138 by the detection objective 134 and the tube lens 136. In this way, layer images are generated on the image sensor 138, each layer image corresponding to one of the layers in the sample 118a that are illuminated with the light sheet. The layer images are captured by the image sensor 138 in the form of image data.

The sample 118a is arranged on a stage 140 of the microscope 100. The stage 140 is configured to move the sample 118a along the optical axis O2 of the optical relay system 102, i.e. the z-direction. Additionally, the stage 140 may be configured to move the sample 118a perpendicular to the optical axis O2 of the optical relay system 102, i.e. the x-direction and the y-direction.

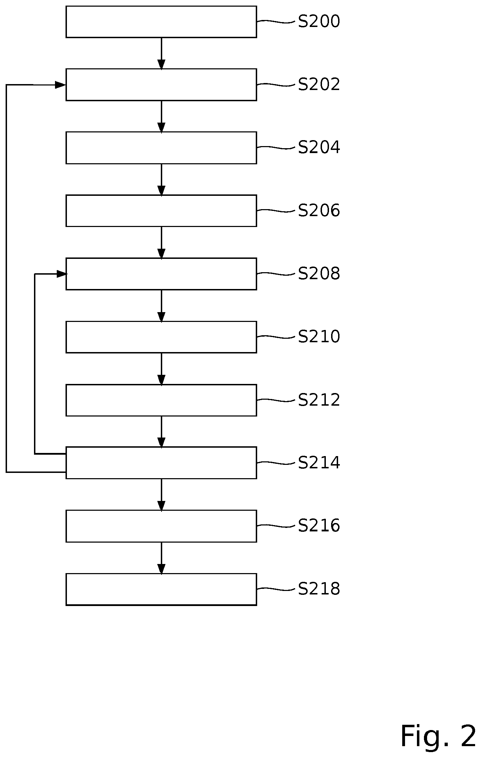

The microscope 100 further comprises a controller 142 configured to control the elements of the microscope 100. The controller 142 is further configured to cause the microscope 100 to perform a method for calibrating the microscope 100. The result of the method are parameters of the calibration. For example, the controller 142 may determine the parameters of a linear or non-linear transformation that relates points in an image space to coordinates in the imaged volume. The method is described in more detail below with reference to Figure 2.

Figure 2 is a flowchart of the method for calibrating a microscope 100 according to an embodiment. The method shown is performed by the controller 142 by way of example only. The method may also be performed, at least in part, manually or by means of an external control device, such as a computer connected to the microscope 100.

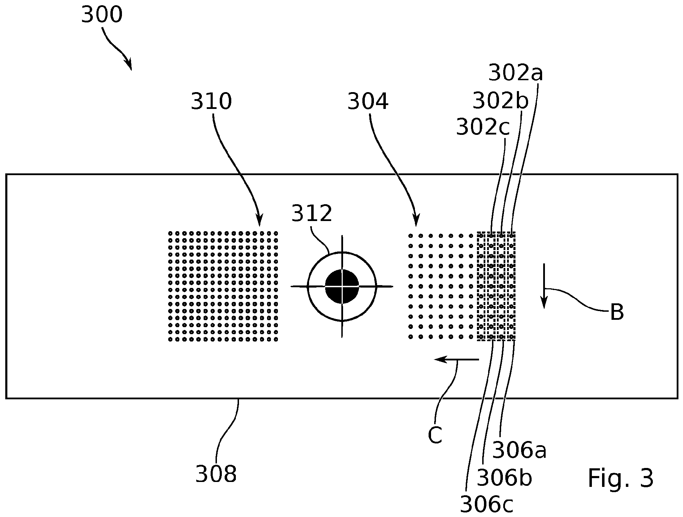

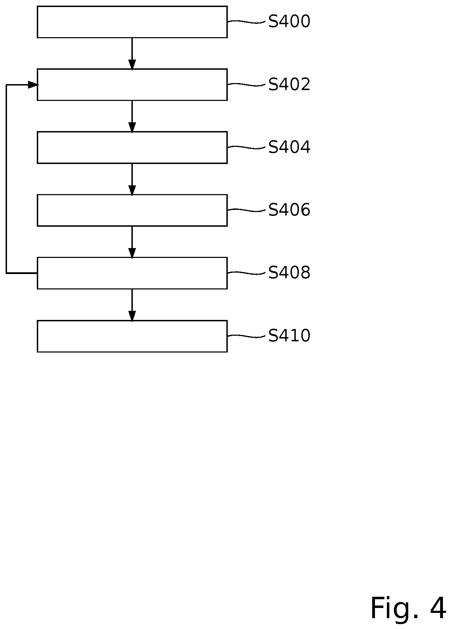

Before the method is started a reference object 300 is placed in the sample space 118 of the microscope 100. This may be done manually, or automatically using a robotic arm controlled by the controller 142. The reference object 300 comprises multiple pattern elements 302a, 302b, 302c arranged in a known regular pattern 304. An exemplary reference object 300 is shown in Figure 3. The method is then started in step S200. In the optional step S202 a first region 306a of the reference object 300 is automatically determined. The first region 306a comprises at least one first pattern element 302a. An exemplary sub-process for automatically determining the first region 306a is described below with reference to Figure 4. If step S202 is not performed, the first region 306a needs to be determined manually before the method is started in step S200.

In step S204 the first region 306a is illuminated using illumination light generated by the microscope 100. Using the above-described microscope 100 as an example, the first region 306a is illuminated using the light sheet. The first region 306a is formed at the intersection of the light sheet and the surface of the reference object 300 on which the pattern elements 302a, 302b, 302c are arranged. Preferably, the first region 306a is illuminated using the part of the light sheet with the smallest thickness. Using a confocal laser scanning microscope, the first region 306a may be scanned with a focused illumination light beam. In a non-scanning microscope, masks may be used to limit the illumination to the first region 306a. However, such a limitation is not strictly necessary in a non-scanning microscope. In step S206 at least one first image comprising the first region 306a is generated using the optical system 104 of the microscope 100. First image data corresponding to the first image is generated.

In step S208, based on the first image data and the knowledge of the regular pattern 304, the controller 142 determines an approximate position of at least one second pattern element 302b. For example, based on the first image data, the position of the first pattern element 302a in the first image is determined. Based on the known distance between neighboring pattern elements 302a, 302b, the approximate position of the second pattern element 302b is determined. In step S210 a second region 306b is determined such that it comprises the approximate position of the second pattern element 302b. Preferably, the second region 306b is determined such that a gap is formed between the first and second regions 306a, 306b. No pattern elements 302a, 302b, 302c are arranged in this gap, and therefore no information essential to the calibration can be gathered by imaging this gap. In step S212 the second region 306b is illuminated using the illumination light generated by the microscope 100 as the first region 306a has been illuminated in step S204. In step S214 at least one second image comprising the second region 306b is generated using the optical system 104 of the microscope 100. Second image data corresponding to the second image is generated.

The steps S208 to S214 may be repeated to generate further image data. In the repeated step S208, an approximate position of at least one further pattern element 302c is determined based on the image data generated thus far and the knowledge of the regular pattern 304. Based on this approximate position a further region 306c comprising the further pattern element 302c is determined in the repeated step S210, which is illuminated in repeated step S212 and imaged in repeated step S214 to generate further image data. In order to calibrate the microscope 100 for volumetric imaging, the steps S202 to S214 may be repeated with the reference object 300 being arranged at different z-positions, i.e. different positions along the optical axis O2 of the optical relay system 102. Between repetitions, the reference object 300 is moved by a predetermined distance using the stage 140. All image data generated during this method is preferably generated such that data not relevant to the calibration is discarded. For example, the image data may be generated as a point cloud where each point corresponds to the position of one of the imaged pattern elements 302a, 302b, 302c.

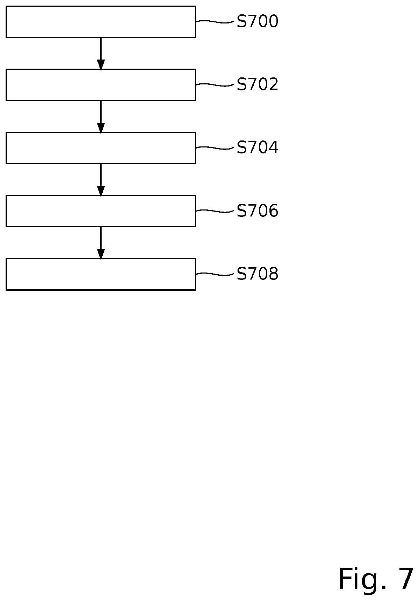

In step S216 the controller 142 determines the parameters of the calibration based on the image data gathered in the preceding steps. If the steps S202 to S214 have been repeated for different z-positions, the predetermined distance is taken into account as well to determine the parameters of the calibration. An example of how to generate the parameters of the calibration is described below with reference to Figure 7. The method is then ended in step S218.

Figure 3 is a schematic view of the reference object 300 used for the method according to Figure 2. The reference object 300 is only exemplary formed as a technical sample comprising a microscope slide 308 on which the regular pattern 304 of the pattern elements 302a, 302b, 302c is arranged.

The pattern elements 302a, 302b, 302c are dot-shaped elements which are placed on the surface of the microscope slide 308, for example as dots of fluorescent dye. Alternatively, the pattern elements 302a, 302b, 302c are formed in the microscope slide 308, for example as blind holes formed in the surface. The pattern elements 302a, 302b, 302c may reflect the illumination light, in which case the remaining surface of the microscope slide 308 is made non-reflective, for example by applying a black dye. Alternatively, the pattern elements 302a, 302b, 302c are fluorescent and emit fluorescent light when excited by the illumination light instead of only reflecting the illumination light.

In the embodiment shown in Figure 3, the pattern elements 302a, 302b, 302c are arranged in two rectangular grids having two perpendicular axes, each grid forming a regular pattern 304, 310. A first axis is parallel to the extension direction B and the second axis is parallel to the scanning direction C. Each grid is characterized by a different distance between the pattern elements 302a, 302b, 302c. The distances between the pattern elements 302a, 302b, 302c are in the order of 10 µm, for example 14 µm. In Figure 3, the distances are shown much larger than they would be in reality in order to make Figure 3 legible.

A first row of the first grid comprises the first pattern element 302a. The first region 306a comprises the first row of pattern elements 302a, 302b, 302c. A second row of the first grid comprises the second pattern element 302b. The second region 306b comprises the second row of pattern element. The first grid comprises further rows, each row comprises further pattern elements 302c. Each of the further rows may be part of one of the further regions 306c imaged during one of the repetitions of steps S208 to S214.

The reference element shown in Figure 3 further comprises a fiducial mark 312 in the form of a cross. The fiducial mark 312 is arranged centrally on the microscope slide 308 and may be used to align images captured by different detectors of the microscope 100 at the same time.

Figure 4 is a flowchart of the sub-process for automatically determining the first region 306a. The sub-process shown is performed by the controller 142 by way of example only. The sub-process may also be performed, at least in part, manually or by means of an external control device, such as a computer connected to the microscope 100.

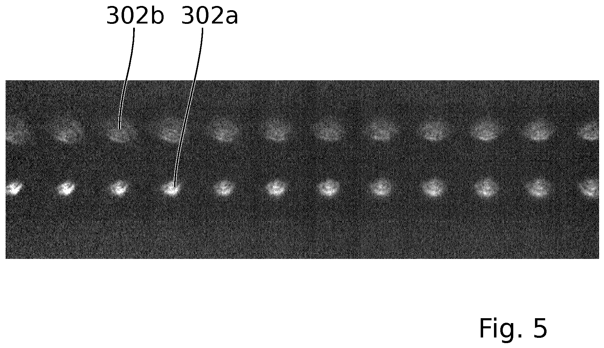

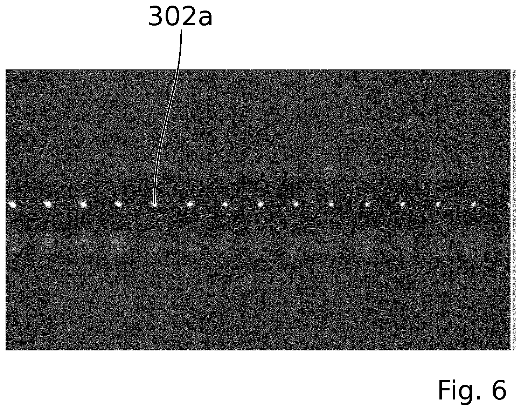

The sub-process is started in sub-step S400. In sub-step S402 a region of the reference object 300 is illuminated using the illumination light. In sub-step S404 an image of the region illuminated in sub-step S402 is generated using the optical system 104 of the microscope 100. Image data is generated corresponding to the image. In sub-step S406 the controller 142 determines based on the image data whether the image generated in sub-step S404 comprises pattern elements 302a, 302b, 302c. The controller 142 further determines whether the pattern elements 302a, 302b, 302c appear out of focus, which is exemplary depicted in Figure 5, or in focus, which is exemplary depicted in Figure 6. The sub-steps S402 to S406 are repeated for neighboring or overlapping regions of the reference object 300 until at least one focused image of a pattern element 302a, 302b, 302c is generated. The total area illuminated and imaged during the sub-process forms the first region 306a of the reference object 300.

In an optional sub-step S408 the controller 142 verifies the correct placement of the reference object 300. For example, the controller 142 determines if the grid aligns with the extension direction B and the scanning direction C to assure a good focus of all pattern elements 302a, 302b, 302c of a row at a similar setting of the scanning device 130 and protect the calibration from containing a rotational error due to a wrong placement of the reference object 300. The sub-process is then ended in sub-step S410.

Figure 5 is a schematic view of a region of the reference object 300 captured by the microscope 100 according to Figure 1. In Figure 5, the light sheet illuminates two neighboring rows of pattern elements 302a, 302b. Neither row is in focus, thus the pattern elements 302a, 302b appear as smeared dots in the view of Figure 5.

Figure 6 is a schematic view of another region of the reference object 300 captured by the microscope 100 according to Figure 1. In the view of Figure 6 the light sheet generated by the microscope 100 illuminates a row of pattern elements 302a. The row of pattern elements 302a is in focus and appears dot-like in the image.

Figure 7 is a flowchart of a sub-process for determining the parameters of the calibration. The sub-process shown is performed by the controller 142 by way of example only. The sub-process may also be performed, at least in part, manually or by means of an external control device, such as a computer connected to the microscope 100.

The sub-process is started in sub-step S700. In sub-step S702 the controller 142 determines the position of the first pattern element 302a in the first image based on the first image data. In sub-step S704 the controller 142 determines the position of the second pattern element 302b in the second image based on the second image data. In optional sub-steps following sub-step S704 the controller 142 may determine the position of further pattern elements 302c in subsequently generated images based on the corresponding further image data. In sub-step S706 the controller 142 compares the determined positions of the pattern elements 302a, 302b, 302c with the regular pattern 304 to determine the parameters of the calibration. For example, the controller 142 determines the parameters as parameters of a linear or non-linear transformation that models the distortions introduced by the optical system 104 of the microscope 100. This may be done by solving an optimization problem. For example, controller 142 determines the parameters of the transformation such that for each imaged pattern element 302a, 302b, 302c the distance between the position of the pattern element 302a, 302b, 302c in the image and the position of the pattern element 302a, 302b, 302c on the reference element 300 transformed by the transformation is minimized. The sub-process is then ended in sub-step S708.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Microscope
- 102: Optical relay system
- 104: Optical system
- 106: Optical illumination system
- 108: Optical detection system
- 110: Intermediate image space
- 112: Illumination light source
- 114: Illumination objective
- 116: Objective
- 118: Sample space
- 118a: Sample
- 120: Tube lens
- 122, 124: Ocular
- 126: Tube lens
- 128: Projection objective
- 130: Scanning device
- 132: Movable mirror
- 134: Detection objective
- 136: Tube lens
- 138: Image sensor
- 140: Stage
- 142: Controller
- 300: Reference object
- 302a, 302b, 302c: Pattern element
- 304: Pattern
- 306a, 306b, 306c: Region
- 308: Microscope slide
- 310: Pattern
- 312: Fiducial mark
- A: Light propagation direction
- B: Extension direction
- C: Scanning direction

## Claims

1. Method for determining a calibration of a microscope (100), the method comprising the following steps:
a) illuminating a first region (306a) of a reference object (300) using illumination light generated by the microscope (100), wherein the reference object (300) is arranged in a sample space (118) of the microscope (100) and comprises multiple pattern elements (302a, 302b, 302c) arranged in a known regular pattern (304, 310), and the first region (306a) comprises at least one first pattern element (302a);
b) generating at least one first image of the first region (306a) using an optical system (104) of the microscope (100) and generating first image data corresponding to said at least one first image;
c) determining an approximate position of at least one second pattern element (302b) based on the first image data and the known regular pattern (304, 310);
e) determining a second region (306b) of the reference object (300) comprising the at least one second pattern element (302b) based on the previously determined approximate position;
f) illuminating the second region (306b) using the illumination light;
g) generating at least one second image of the second region (306b) using the optical system (104) of the microscope (100) and generating second image data corresponding to said at least one second image; and
h) determining parameters of a calibration for the microscope (100) based on the first image data and the second image data.

2. The method according to claim 1, wherein the extent of the second region (306b) along the distance between the at least one first pattern element (302a) and the at least one second pattern element (302b) is smaller than said distance.

3. The method according to claim 1 or 2, wherein the pattern elements (302a, 302b, 302c) of the reference object (300) are arranged in a two-dimensional grid, said grid having a known spacing.

4. The method according to claim 3, wherein the first region (306a) comprises two or more first pattern elements (302a) forming part of a first row of the grid, and the second region (306b) comprises two or more second pattern elements (302b) forming part of a second row of the grid.

5. The method according to any one of the preceding claims, wherein
the steps a) to g) are repeated;
the reference object (300) is moved along the optical axis of the microscope (100) by a predetermined distance between each of the repetitions using a stage (140) of the microscope (100); and
the calibration is determined based on the first image data and the second image data generated in each repetition taking the predetermined distance into account.

6. The method according to any one of the preceding claims, wherein the microscope (100) is an optical scanning microscope, in particular a confocal laser scanning microscope, or a light sheet microscope (100) configured to generate a light sheet extending along a light propagation direction (A) and an extension direction (B) perpendicular thereto.

7. The method according to claim 6, wherein the microscope (100) is the light sheet microscope (100), and the pattern elements (302a, 302b, 302c) of the reference object (300) are arranged in a two-dimensional grid, said grid having a known spacing, and the reference object is arranged such in the sample space (118) that the extension direction (B) is aligned with one axis of the grid.

8. The method according to claim 6 or 7, wherein the microscope (100) is the light sheet microscope (100), and the first region (306a) and the second region (306b) are illuminated by illuminating a plurality of layers arranged successively along a scanning direction (C) using the light sheet.

9. The method according to claim 8, wherein the pattern elements (302a, 302b, 302c) of the reference object (300) are arranged in a two-dimensional grid, said grid having a known spacing, and the reference object is arranged such in the sample space (118) that the scanning direction (C) is aligned with one axis of the grid.

10. The method according to any one of the claims 6 to 9, wherein the microscope (100) is an oblique plane microscope (100).

11. The method according to any one of the claims 1 to 5, wherein the microscope (100) is a transmission microscope or a reflectance microscope.

12. The method according to any one of the preceding claims, wherein the step of determining the parameters of the calibration comprises the following sub-steps:
h') determining a position of the at least one first pattern element (302a) in the first image based on the first image data;
h") determining a position of the at least one second pattern element (302b) in the second image based on the second image data; and
h‴) comparing the determined position of the at least one first and second pattern elements (302a, 302b) with the known regular pattern (304, 310).

13. The method according to any one of the preceding claims, wherein the parameters of the calibration are parameters of a linear or non-linear transformation mapping coordinates of the imaged volume to coordinates in the image of said volume generated by the optical system (104) of the microscope (100) or vice versa.

14. The method according to any one of the preceding claims, wherein the step of generating the first image data and the step of generating the second image data comprise discarding image information not related to any one of the pattern elements (302a, 302b, 302c).

15. The method according to any one of the preceding claims, wherein the method comprises the additional step of: successively illuminating neighboring or overlapping areas of the reference object (300) and generating an image of the illuminated area each time until a focused image of the at least one first pattern element (302a) is generated.

16. The method according to any one of the preceding claims, comprising the additional steps of:
c') determining an approximate position of at least one third pattern element based on the second image data and the known regular pattern (304, 310);
e') determining a third region of the reference object (300) comprising the at least one third pattern element based on the previously determined approximate positions;
f') illuminating the third region using the illumination light; and
g') generating at least one third image of the third region using the optical system (104) of the microscope (100) and generating third image data corresponding to said at least one third image; and
wherein the parameters of the calibration are determined taking the third image data into account.

17. The method according to any one of the preceding claims, wherein the pattern element is a fluorescent element configured to be excitable by the illumination light.

18. Computer program product comprising instructions to cause a microscope (100) to carry out the steps of the method according to any one of the claims 1 to 17.

19. Controller (142) for a microscope (100) configured to cause the microscope (100) to carry out the steps of the method according to any one of the claims 1 to 17.

20. Microscope (100) comprising a controller (142) according to claim 19.
